# EUROPEAN PATENT APPLICATION

(11) **EP 4 835 604 A1**
(43) Date of publication of application: **04.11.2026**
(21) Application number: 25174107.0
(22) Date of filing: 02.05.2025
(51) Int. Cl.: G05D 1/86, G05D 1/242, G05D 1/622, G05D 105/28, G05D 107/70, G05D 109/10

(54) **ROBOTIC VEHICLE**

(71) Applicant: AutoStore Technology AS, 5578 Nedre Vats (NO)
(72) Inventor: MÆHLE, Ole Alexander, 5578 Nedre Vats (NO); STUHAUG, Ragnar, 5578 Nedre Vats (NO)
(74) Representative: Kilburn & Strode LLP

(57) **Abstract**

The disclosure relates to a robotic vehicle arranged to move on a rail system of an automated grid-based storage and retrieval system, the robotic vehicle having: a motion controller arranged to control motion of the robotic vehicle on the rail system; and an override controller arranged, upon determination of an indicator of a potential collision involving the robotic vehicle and a human, to override the motion controller to impede motion of the robotic vehicle.

## Description

### TECHNICAL FIELD

The disclosure relates to a robotic vehicle. More particularly it relates to a robotic vehicle of an automated storage and retrieval season having a motion controller and an override controller.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

During operation of the automated storage and retrieval system, it may be necessary for a human to move about on top of the rail system. This may be for a number of reasons, for example: to repair or retrieve a malfunctioning robot on the rail system, or to inspect the rails themselves. A human may move about on top of the rail system while riding on a Manned Service Vehicle (MSV). As one possibility, they may move about by walking on grid service plates that are placed between the rails so as to block openings therebetween. As robotic container-handling vehicles moving on the rail system can move at significant speeds and could cause injury upon collision with a human, it is normal to stop all robotic storage and retrieval vehicles prior to permitting a human to move about on top of the rail system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a block diagram of a robotic vehicle;
Figs. 6A and 6B show a top view of a human and a robotic vehicle on a storage system;
Fig. 7 shows a flow chart of steps involved in a method of operating the robotic vehicle of Fig. 5; and
Fig. 8 shows a flow chart of steps involved in a method of determining an indicator of a potential collision between the robotic vehicle of Fig. 5 and a human operating on a rail system.

### DETAILED DESCRIPTION

In overview, the disclosure relates to an override controller for a robotic vehicle that can move on a rail system of an automated storage and retrieval system. The robotic vehicle has a motion controller to control normal motion of the robotic vehicle on the rail system. However, upon determination of a potential collision between the robotic vehicle and a human, an override controller overrides the motion controller to impede motion of the robotic vehicle. This provides a safe and effective way of preventing collisions involving humans on the rail system.

The override controller may be configured to operate independently of the motion controller. In this way, it may be retrofitted to the robotic vehicle, and additionally or alternatively also be safety tested and approved independently of any other aspects of the automated storage and retrieval system. The override controller can thus be safety approved and then kept unmodified (and so not needing further safety approval) whilst other aspects of the robotic vehicle are separately developed. This allows a safety system to be set in place without impeding subsequent development/improvement of the rest of the robotic vehicle - as would be the case if the whole vehicle needed to undergo safety testing each time a development was made.

### Automated storage and retrieval system overview

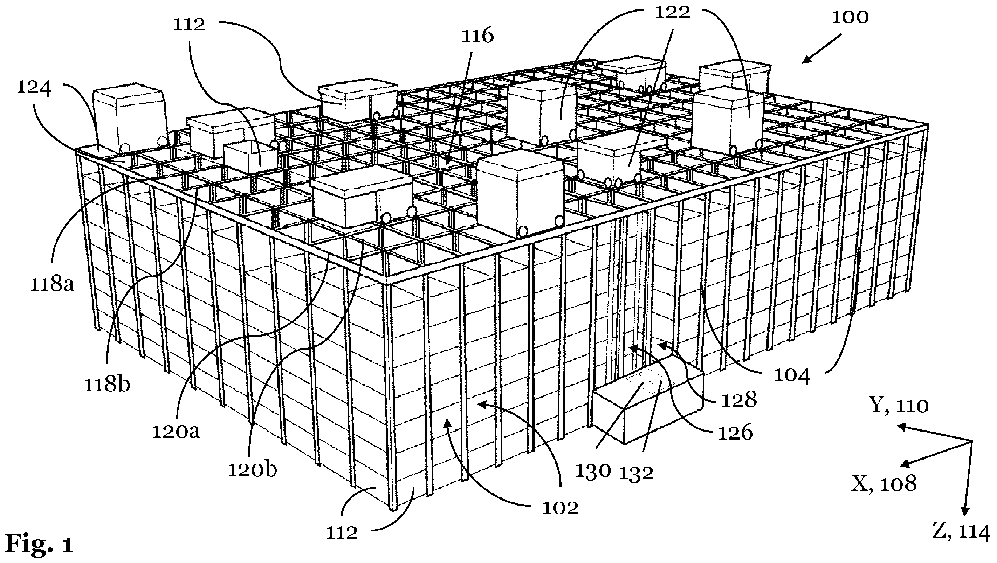

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

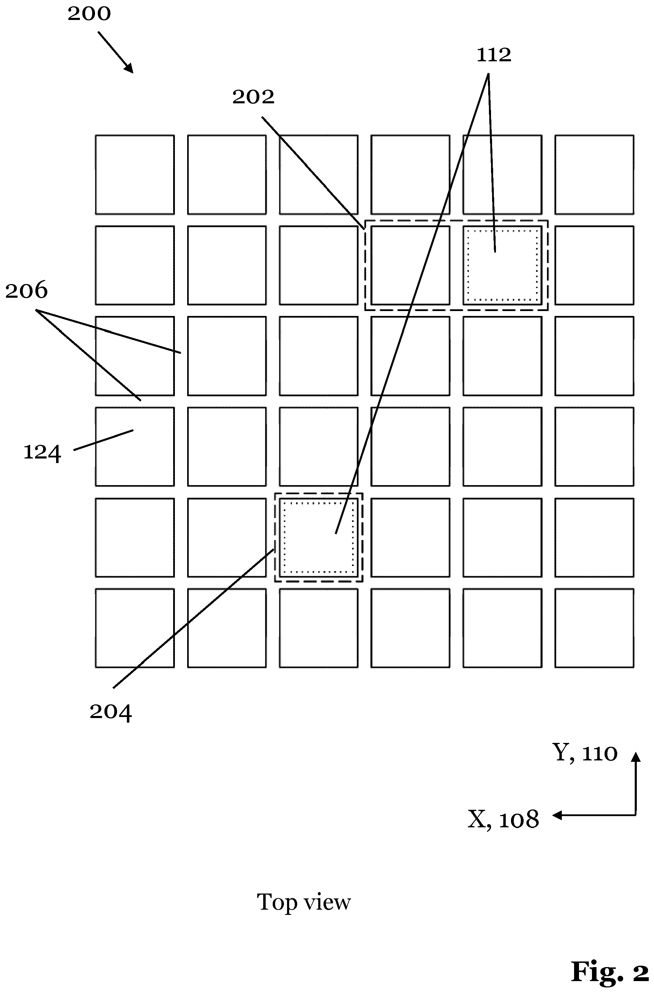

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

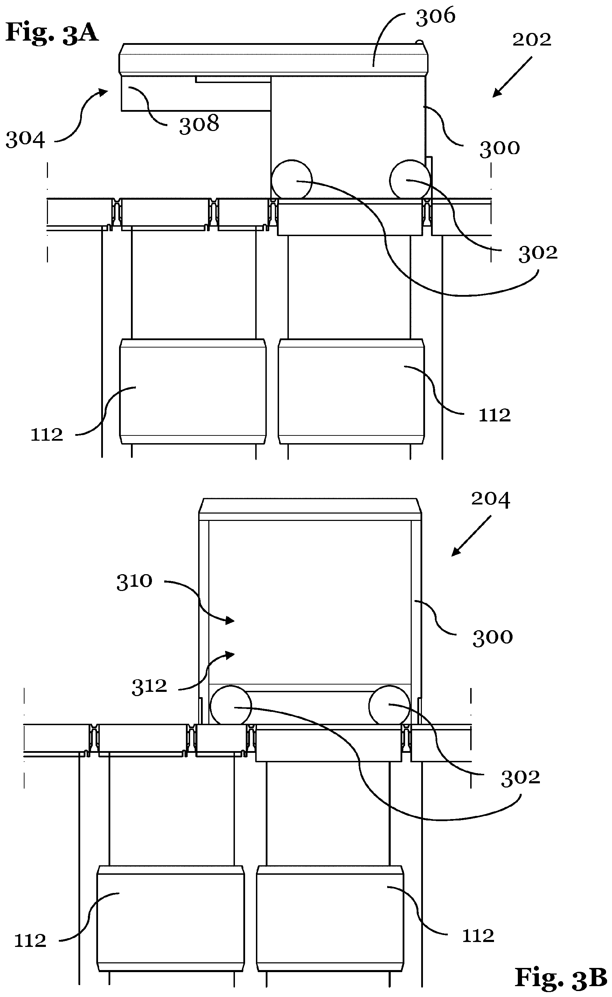

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

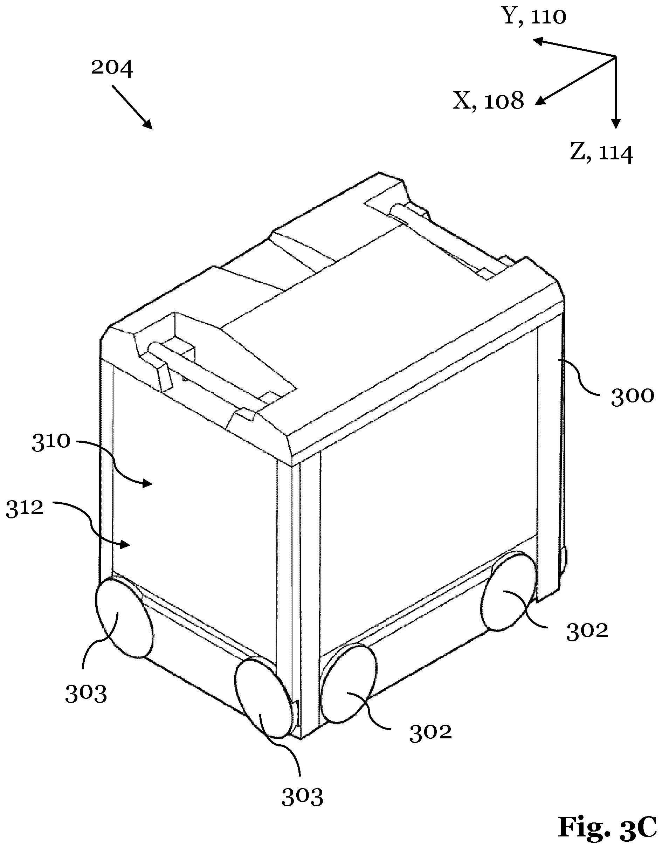

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

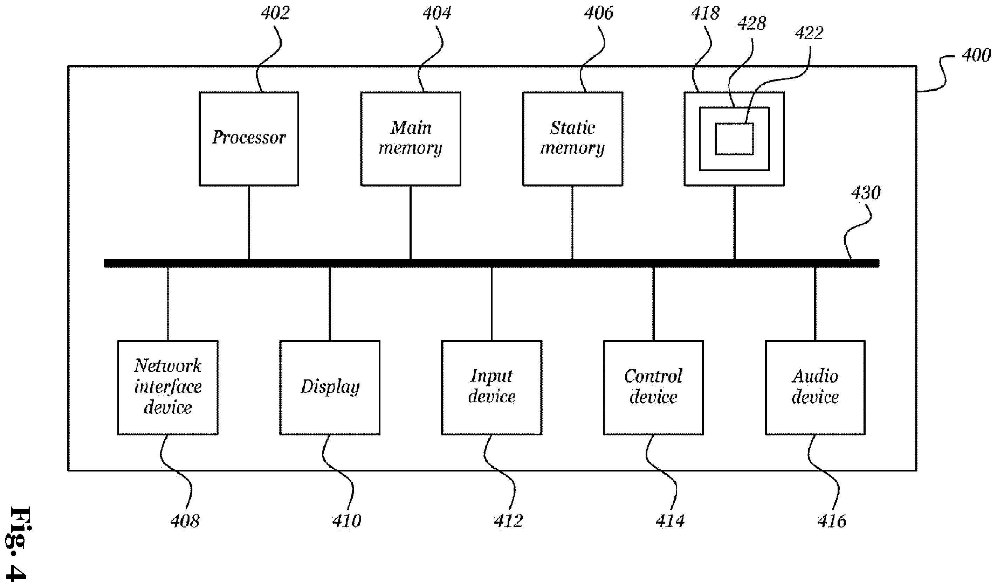

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Override controller

During operation of the automated storage and retrieval system, it may be necessary for a human to operate upon the rail system of the automated storage and retrieval system. This necessity may arise from a number of reasons, for example servicing or retrieving a malfunctioning vehicle, or repairing or installing a component of the rail system. Certain measures may be taken to allow a human operator to safely operate upon the rail system. Solutions to this could decrease the efficiency of the automated storage and retrieval system. For example, if a malfunctioning robot is required to be retrieved from the rail system, typically, the control system must stop all robotic vehicles operating on the rail system so that the human can safely access the rail system and retrieve the malfunctioning robot. Alternatively, the control system may isolate a portion of the grid (including the location of the malfunctioning robot) such that no other robotic vehicles may enter that portion until the malfunctioning robot has been retrieved. As a result, collisions between robotic vehicles and a human retrieving the malfunctioning robot may be prevented. However, stopping or isolating the grid can cause inefficiencies in the automated storage and retrieval system, as normally functioning robots may not be able to move or have access to containers within an isolated portion of the grid. Therefore, stopping or isolating portions of the grid leads to partial or whole system downtime and overall performance losses.

In some examples, motion of a robotic vehicle is controlled by a control system (Fig. 4). That is, instructions for driving the motors are received by the robotic vehicle from the control system. In this way, optimised route planning can be employed to prevent collisions between the robotic vehicles and an human operator located on the grid. However, this collision prevention method may not be safety approved, and thus may not be sufficient to allow a human to operate safely on the rail system of the storage grid. For example, this method may fail to redirect all robotic vehicles, or the human may unexpectedly change path on the rail system. Generally speaking, it is difficult to carry out route planning whilst taking into account the unpredictable path a human or human-operated vehicle may follow. For health and safety reasons, it is preferable for the collision prevention method of the control system to be safety approved. To achieve this, it is desirable to implement a collision prevention system and method which is configured to act on robotic vehicles that are or that may become too close to a human or other vehicle (e.g. a service vehicle) operating on the same rail system. It is further desirable to provide a collision prevention system that is able to be retrofitted to robotic vehicles.

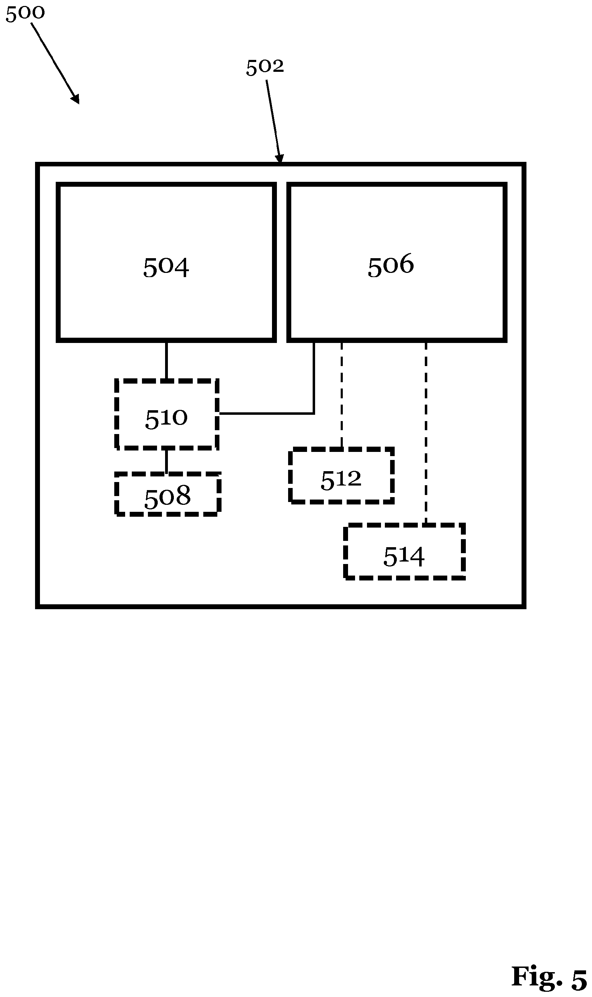

An override controller for robotic vehicles arranged to operate on the rail system of the automated storage and retrieval system is provided in the present disclosure to provide a means to allow a human to operate on the rail system without shutting down the entirety or portions of the grid. In other words, the disclosed override controller enables robotic container-handling vehicles to continue to operate on the rail system as usual whilst the human is also operating on the rail system (using a service vehicle or otherwise). The override controller is now discussed with reference to Fig. 5.

A block diagram 500 of a robotic vehicle 502 is depicted in Fig. 5. The components of the robotic vehicle 502 depicted in block diagram 500 may be in addition to the features discussed with reference to Fig. 4. During normal operation of the robotic vehicle 502, motion of the robotic vehicle 502 on the rail system is controlled by a motion controller 504. The motion controller 504 may be configured to control one or more motors 508 of the robotic vehicle 502, which in turn drive one or more sets of wheels (e.g., wheel sets 302, 303 as described above) to cause the robotic vehicle 502 to move upon the rail system. The motion controller 504 may receive instructions from a centralised or internal control system to control the motion of the robotic vehicle 502.

In an example, the robotic vehicle 502 further comprises an arrangement of semiconductor switches 510. In this example, under normal operation, the motion controller 504 is configured to control the semiconductor switches 510. By controlling the semiconductor switches 510, the motion controller 504 can control the one or more motors 508 of the robotic vehicle 502. In an example, the semiconductor switches may be arranged as one or more H-Bridges, however the present disclosure is not limited as such. In general, any suitable arrangement of semiconductor switches may be used to control the one or more motors 508.

In an example, the robotic vehicle 502 may further, or alternatively, comprise a mechanical brake. In this example, under normal operation, the motion controller 504 may be configured to control the mechanical brake 514. By controlling the mechanical brake 514, the motion controller 514 can reduce the speed of the robotic vehicle when it is moving on the rail system, or altogether impede motion of the robotic vehicle 502 on the rail system.

The robotic vehicle 502 additionally comprises an override controller 506. The override controller 506 is configured to override the motion controller 504 upon determination of an indicator of a potential collision between the robotic vehicle 502 and another entity operating on the rail system (e.g., a human or other vehicle, such as a service vehicle). For example, the indicator of a potential collision may indicate that the distance between the robotic vehicle 502 and the other entity operating on the rail system is below a distance threshold. That is, that the robotic vehicle 502 is too close to the other entity. The override controller 506 is configured to impede the motion of the robotic vehicle 502 in the event of a potential collision to avoid such a collision.

The override controller 506 may be configured to drive or impede the motors 508 of the robotic vehicle 502 to reduce the speed of the robotic vehicle 502. As such, collision between the robotic vehicle 502 and the human may be prevented.

Again, driving the motors 508 using the override controller 506 may comprise overriding control of semiconductor switches 510 by the motion controller 504. Additionally or alternatively, the override controller 506 may be configured to prevent acceleration of the robotic vehicle 502 if the robotic vehicle 502 is not moving. That is, the override controller 506 may be configured to prevent the motion of a stationary robotic vehicle 502.

The override controller 506 may be configured to operate the mechanical brake 514 of the robotic vehicle 502. In some examples, the override controller 506 may be configured to operate the mechanical brake instead of controlling the semiconductor switches 510. In some examples, the override controller 506 may be configured to operate the mechanical brake in addition to controlling the semiconductor switches 510. As such, the speed of the robotic vehicle 502 may be reduced at a faster rate compared to if the override controller only operates/controls one of the mechanical brake of the semiconductor switches.

The override controller may act independently of the motion controller. In this sense, it may be retrofitted to the robotic vehicle. Additionally, this allows for the provision of a safety approved way of impeding motion of robotic vehicles. In more detail, the independent action of the override controller allows for simpler safety testing because the robotic vehicle may be tested without negatively impacting the rest of the automated storage and retrieval system. For example, if the motion controller or control system were to be safety approved, an update would need to be applied to the control system which would cause downtime, and be expensive.

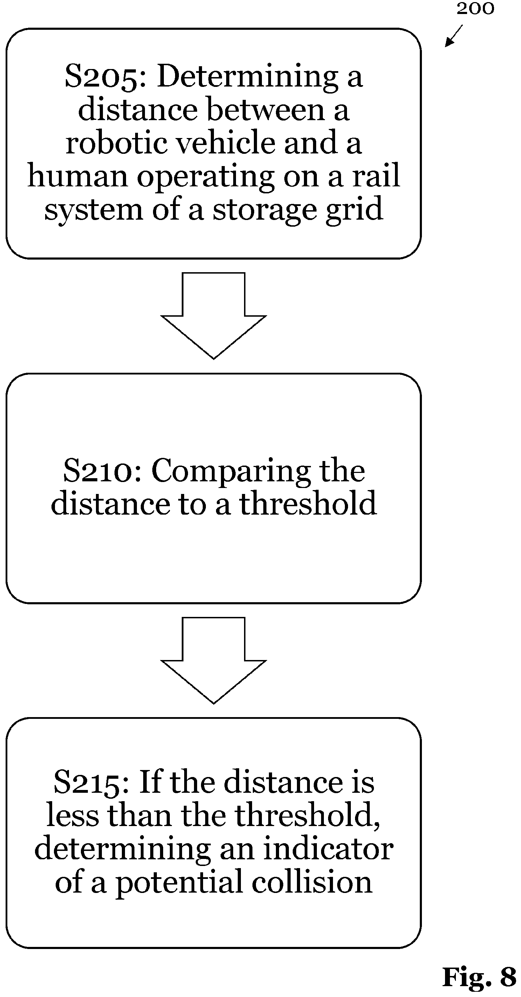

As mentioned previously, the override controller 506 is configured to override the motion controller 504 upon determination of an indicator of a potential collision between the robotic vehicle 502 and a human or human-operated vehicle. An indicator of a potential collision between the robotic vehicle 502 and a human/human operated vehicle may be determined based on the distance between the robotic vehicle 502 and the human/human operated vehicle. The distance between the robotic vehicle 502 and the human/human operated vehicle may be determined using a distance determination module 512, as described in more detail below with reference to Fig. 8. The distance determination module 512 may be configured to determine a distance between the robotic vehicle and the human/human operated vehicle and compare the determined distance to a threshold. The threshold may be a minimum distance threshold as described in more detail below with reference to Fig. 8. If the determined distance is below the distance threshold, the override controller 506 may override the motion controller to impede motion of the robotic vehicle 502.

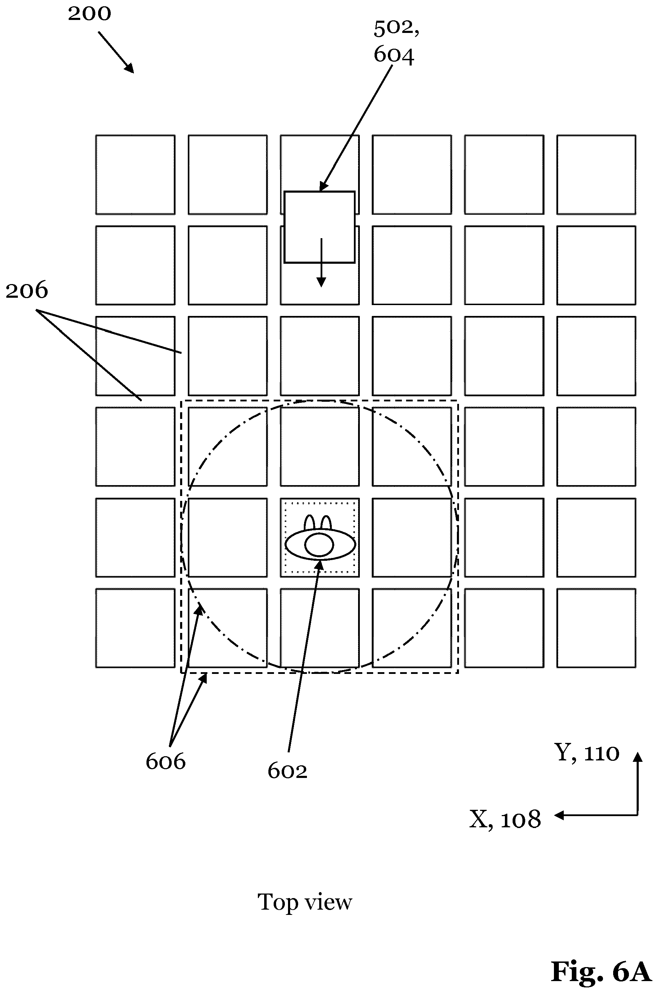

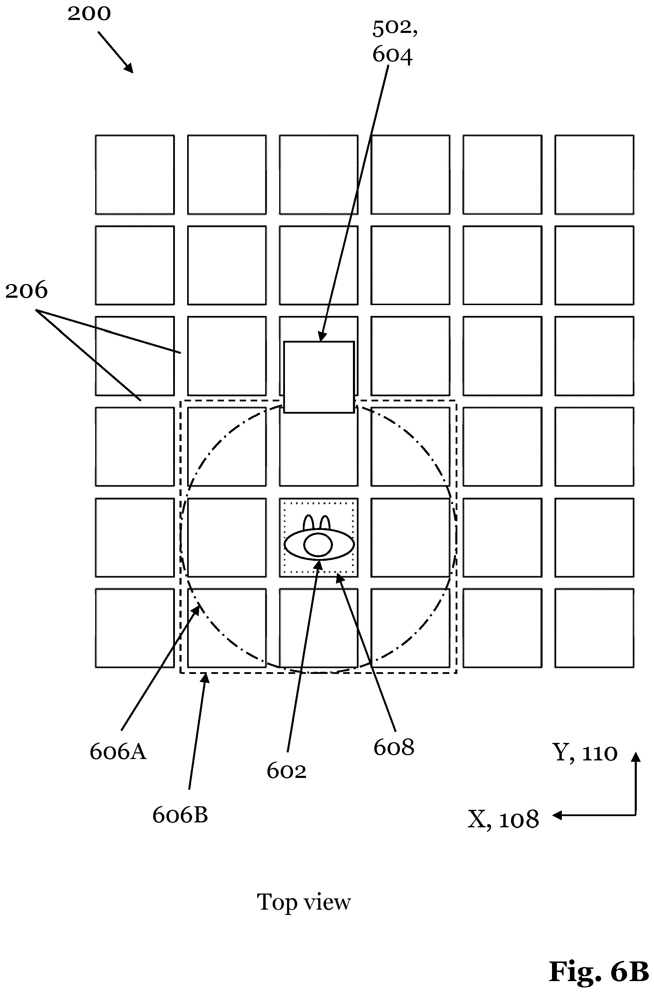

With reference to Figs. 6A-6B a plan view of a human 602 and a robotic vehicle 604 operating on the rail system 206 of a storage system 200 are shown. As mentioned previously, in some examples the human 602 may be operating a service vehicle such as a Manned Service Vehicle (MSV), which is not shown in the image. However, it would be appreciated that the MSV may extend across a number of cells of the grid storage system. In other words, the MSV may have a footprint of, e.g. 2x3 cells or may extend across a non-integer number of cells of the grid. Exemplary distance thresholds are shown in Figs. 6A and 6B. In one example, the threshold can be defined as a minimum radial distance to the human/human operated vehicle, in which case the threshold defines a circular area 606A (shown in Figs. 6A and 6B) centred on and surrounding the human/human operated vehicle. The circular area has a radius corresponding to the distance threshold value such that any position inside the circle is below the minimum distance threshold (i.e. any robotic vehicle at least partially inside the circle 606 may then considered too close to the human/human operated vehicle). Alternatively, the distance threshold may be defined as a minimum number of cells, such that a robotic vehicle cannot come closer than a predetermined number of cells to the human/human operated vehicle. In this case, the threshold defines a square or rectangular area 606B that is centred on the human/human operated vehicle. The size of the square/rectangular area 606B corresponds to the predetermined minimum number of cells that separate the robotic vehicle and the human/human operated vehicle. Any robotic vehicle at least partially inside the area 606B may then be considered too close to the human/human operated vehicle.

It would be appreciated that the areas 606A/606B may alternatively be centred on each robotic vehicle 502 operating on the rail system, since whether the area defined by the minimum distance threshold is centred on the robotic vehicle or the human does not affect the actual minimum distance threshold between the two entities.

Fig. 6A shows the robotic vehicle 502 outside of the area 606A/606B representing the minimum distance threshold between the robotic vehicle 502 and the human 602. The robotic vehicle 502 may be moving towards the human or generally towards the area 606A/606B. Fig. 6B shows the robotic vehicle 502 partially inside area 606A/606B. As the robotic vehicle is moving, the distance between the human/human operated vehicle is continually or periodically calculated using exemplary techniques described below. If the distance between the robotic vehicle 502 and the human 602 is determined (by the distance determination module 512), to be below a minimum distance threshold 606, an indicator of a potential collision may be communicated to the override controller 506 by the distance determination module. The override controller 506 is configured to override the motion controller 504 of the robotic vehicle 502 responsive to the determination of the potential collision/responsive to the receipt of the indicator of the potential collision. The override controller 506 is configured to impede motion of the robotic vehicle 502 in order to prevent a collision with the human 602. In this way, the override controller 506 causes the robotic vehicle 502 to slow down and optionally completely cease movement before reaching the human 602. As such, the human 602 is able to safely traverse the rail system of the automated storage and retrieval system without the risk of robotic vehicles getting too close.

Referring again to Figs. 6A and 6B, Fig. 6A shows a robotic vehicle 502 moving generally towards the human 602 but outside of the area 606A/606B representing the minimum distance threshold. Fig. 6B represents a later time at which the robotic vehicle 502 has continued moving towards the human 602 and has entered the area 606A/606B. Upon a determination that the robotic vehicle is less than the minimum distance threshold away from the human, the override controller impedes motion of the robotic vehicle to bring it to a stop (e.g. by activating a mechanical brake 514 or the series of semiconductor switches 510, or by otherwise controlling the motors 508 of the vehicle), thus protecting the human 602.

In general, it is not necessary that a robotic vehicle is travelling directly towards the human for the override controller 506 to override the motion controller 504. Instead, the human 602 and the robotic vehicle 502 may be travelling perpendicularly to each other or in any other relative direction. In general, the override controller 506 is configured to override the motion controller 504 in any scenario where the relative distance is determined to be below the minimum distance threshold (i.e., whenever the robotic vehicle is at least partially inside area 606A/606B centred on the human/human operated vehicle or whenever the human/human operated vehicle is at least partially inside area 606A/606B centred on the robotic vehicle).

It will be appreciated that the override controller 506 may not permanently assume control of the semiconductor switches 510 and/or motors 508 and/or brakes. For example, if the human 602 has moved away from the robotic vehicle 502 such that the robotic vehicle 502 is no longer below the minimum distance threshold (the robotic vehicle is no longer inside are 606A/606B0, the override controller 506 may surrender control of the semiconductor switches 510, motors 508, and/or mechanical brake back to the motion controller 504. As a result, the robotic vehicle 502 may resume normal operation.

In more detail, the motion controller 504 may have initially had instructions to move the robotic vehicle 502 to a certain location in the automated storage and retrieval system in order to perform a task. This may then be postponed due to the location of the robotic vehicle 502 falling below the minimum distance threshold. That is, normal operation of a robotic vehicle 502 may be paused when a robotic vehicle is determined to be too close to a human 602 operating on the grid. Thus, the motion controller 504 may be overridden by the override controller 506. Once the location of the robotic vehicle 502 no longer below the minimum distance threshold 606, the motion controller 504 may regain control of the motion of the robotic vehicle 502, and thus continue with the instructions it had before it was interrupted/postponed.

It will be appreciated that the above description may extend to multiple robotic vehicles. For example, multiple robotic vehicles may operate on the rail system at a single given time. Each of the robotic vehicles may comprise the features described in relation to Fig. 5 above, including the override controller 506. In this example, each robotic vehicle 502 may determine the distance between the robotic vehicle 502 and a human/human operated vehicle operating on the grid using respective local distance determination modules 512. Alternatively, a single centralised external distance determination module may determine the distance between all robotic vehicles operating upon the rail system and one or more humans operating on the rail system.

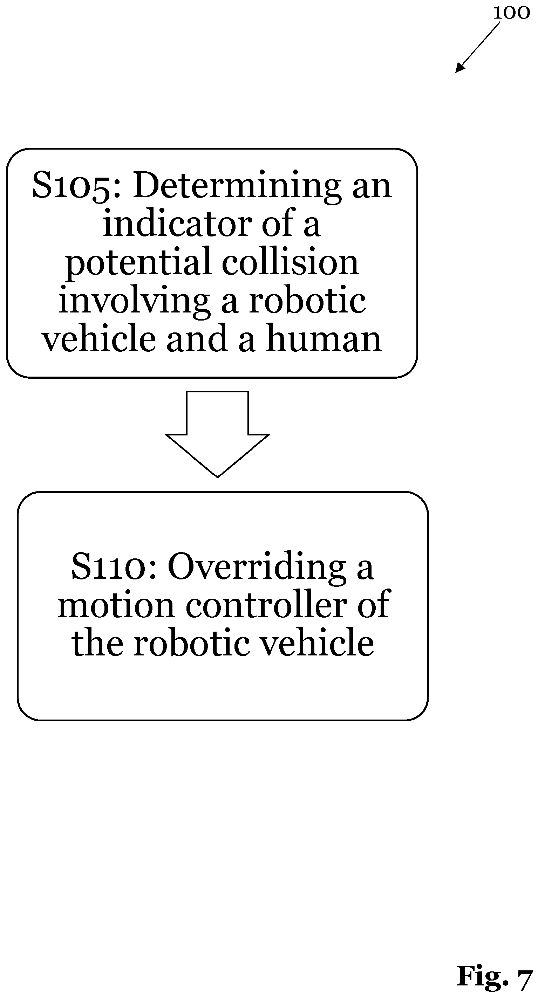

Fig. 7 depicts a flow chart of steps involved in the method 100 of operating the robotic vehicle 502 of Fig. 5.

At step S105, an indicator of a potential collision involving the robotic vehicle and a human is determined. In an example, the indicator of a potential collision may be an indication that the distance between the robotic vehicle and a human has fallen below a minimum distance threshold, as described in more detail in reference to Fig. 8.

At step S110, an override controller of the robotic vehicle overrides the motion controller of the robotic vehicle to impede motion of the robotic vehicle.

During normal operation of the robotic vehicle, the motion controller 504 controls motion of the robotic vehicle. The motion controller may control the motion of the robotic vehicle by driving motors of the robotic vehicle. Driving the motors may comprise controlling semiconductor switches. Further, the motion controller may control the motion of the robotic vehicle by operating a mechanical brake of the robotic vehicle to decelerate or impede the vehicle's motion.

Overriding the motion controller is performed by the override controller 506. The override controller may override control of motors and/or semiconductor switches of the robotic vehicle to impede motion of the vehicle.

Impeding motion may comprise reducing the speed of the robotic vehicle. Additionally or alternatively, it may comprise preventing acceleration of the robotic vehicle if the speed of the robotic vehicle is zero.

Impeding motion may comprise driving motors of the robotic vehicle by the override controller. This may further comprise controlling semiconductor switches 510 of the robotic vehicle to drive the motors. Additionally or alternatively, impeding motion may comprise, by the override controller, applying a mechanical brake.

The method described above may also comprise steps corresponding to any other features described throughout with reference to the robotic vehicle.

A method 200 for determining an indicator of a potential collision between a robotic vehicle 502 of fig. 5 and a human/human operated vehicle operating on the rail system of the automated storage and retrieval grid is shown in Fig. 8.

At step 205 of method 200, a distance between the robotic vehicle and a human operating on the rail system of the storage grid is determined. The distance between the robotic vehicle and a human operating on the rail system of the storage grid may be determined using, for example, a distance determination module 512, as shown in Fig. 5. The distance determination module 512 may be located on the robotic vehicle, or may be separate from the robotic vehicle. The distance determination module may be a local determination module. That is, the distance determination module may be configured to determine the distance between a single robotic vehicle and one or more humans/human operated vehicles operating on the rail system. The distance determination module may be a global distance determination module. That is, the distance determination module may be configured to determine the distance between a plurality of robotic vehicles and one or more humans/human operated vehicles operating on the rail system of the automated storage and retrieval system.

The distance determination module may be configured to continually or periodically monitor the distance between the robotic vehicle and a human operating on the rail system of the storage grid. In some examples, the human may be walking on the grid. For example, the human may be walking on service plates that are placed between the rails of the rail system. In some examples, the human may be operating (that is, riding) a MSV or other human-operated vehicle.

In some examples, the robotic vehicle may include a receiver. The receiver may be configured to receive a signal from a transmitter. The transmitter may be configured to transmit a signal. In some examples, the transmitter may be configured to transmit a polling signal. In some examples, the transmitter may be a radio-frequency transmitter. The transmitter may be located on, or in the vicinity of, a human operating on the grid. For example, the transmitter may be carried by the human operating on the grid. For example, the transmitter may be worn by the human operating on the rail system of the storage grid. In such an example, the transmitter may be located on an item of clothing worn by the human (e.g. a vest). Alternatively the transmitter may be located on a service vehicle operated by the human.

In some examples, the robotic vehicle may include a transmitter. In this example, the receiver may be located on, or in the vicinity of, a human operating on the rail system.

The distance determination module may be configured to determine the distance between the receiver located on the robotic vehicle and the transmitter located on, or in the vicinity of, a human operating on the rail system. The distance determination module may be configured to determine the distance between the transmitter located on the robotic vehicle and the receiver located on, or in the vicinity of, a human operating on the rail system. In this way, the distance determination module may be configured to determine the distance between the robotic vehicle and the human operating on the rail system.

In some examples, the distance determination module may determine the distance between the robotic vehicle and the human operating on the rail system based on a signal strength of the signal received by the receiver of the robotic vehicle from the transmitter affixed to or near to the human/human-operated vehicle. In some examples, the distance determination module may determine the distance between the robotic vehicle and the human operating on the rail system based on a signal strength of the signal received by the receiver affixed to or near to the human/human-operated vehicle from the transmitter of the robotic vehicle. The strength of the signal received by the receiver may be determined using a received signal strength indicator (RSSI).

In general, the signal strength is indicative of a physical distance between the transmitter and the receiver. Therefore, the strength of a signal transmitted by a transmitter affixed to a human or human-operated vehicle can be determined when the signal is received by a receiver affixed to the robotic vehicle. The signal strength indicates the distance between the transmitter and receiver according to an inverse square law, thus allowing a distance determination module 512 connected to the receiver to calculate a distance based on the received signal strength.

In some examples, the distance determination module may determine the distance between the robotic vehicle and the human operating on the rail system based on the time of flight of the signal received by the receiver of the robotic vehicle. In such examples, the time of flight for a signal transmitted by a transmitter affixed to the robotic vehicle, reflected off of the human or human-operated vehicle, and received by a receiver also affixed to the robotic vehicle, is indicative of a distance between the robotic vehicle and the human/human operated vehicle.

In some examples, the transmitter affixed to the human or human-operated vehicle may transmit a signal including a known position of the human operating on the rail system. The distance determination module may determine the distance between the robotic container handling vehicle and the human operating on the rail system based on the known position of the human and a known position of the robotic vehicle.

In some examples, the automated storage and retrieval system may comprise a plurality of beacons. The beacons may be mounted on the storage grid. The beacons may be located in the environment in which the storage grid is provided. For example, the beacons may be mounted to the ceiling under which the storage grid is constructed. In such an example, the distance determination module may determine the distance between a robotic vehicle and a human operating on the rail system using conventional triangulation techniques using the plurality of beacons and optionally using transmitters and/or received located at the robotic vehicle and/or the human/human operated vehicle.

In some examples, the distance determination module may determine the distance between the robotic vehicle and a human operating on the rail system using a camera. In some examples, the distance determination module may determine the distance between the robotic vehicle and a human operating on the rail system using a plurality of cameras. The camera(s) may be located on the robotic vehicle. The camera(s) may be located on, or in the vicinity of, the human operating on the rail system. For example, the camera(s) may be worn by the human operating on the rail system. For example, the camera(s) by be located on a vehicle which the human is operating on the same rail system as the robotic vehicle(s). The camera(s) may be located on the storage grid. For example, the camera(s) may be mounted to the rail system of the storage grid. The camera(s) may be located in the environment in which the storage grid is constructed. For example, the camera(s) may be mounted to the ceiling under which the storage grid is constructed.

In some examples, the distance determination module may determine the distance between the robotic vehicle and a human operating on the rail system using any combination of the above methods. In some examples, the distance determination module may determine the distance between the robotic vehicle and a human operating on the rail system using any method which may occur to a person skilled in the art.

At step 210 of method 200, the distance between the robotic vehicle and a human operating on the rail system may compared to a distance threshold.

The distance threshold may be determined in a way to ensure that the override controller has sufficient time to override the motion controller and to prevent a collision with the human by impeding motion of the robotic vehicle by any method disclosed above.

The threshold may be a minimum distance threshold. The minimum distance threshold may be distance between the robotic vehicle and a human operating on the rail system below which an indicator of a potential collision is communicated to an override controller. In some examples, the minimum distance threshold may be 1 metre, 2 metres, 3 metres, 5 metres, 10 metres or any number therebetween. The minimum distance threshold may be within the range of 10m to 40m. The minimum distance threshold may be within the range of 20m to 30m. In general, the minimum distance threshold may be determined by an operator of the automated storage and retrieval system and may be adjustable to any suitable distance determined by the operator.

Several parameters may be taken into account to determine the minimum distance threshold. For example, the speed of the robotic vehicle may be taken into account. For example, the speed of the human may be taken into account. For example, the deceleration capacity of the robotic vehicle may be taken into account. For example, the weight of the robotic vehicle may be taken into account. For example, any other parameter which may occur to a person skilled in the art may be taken into account to determine the minimum distance threshold. Any combination of parameters may be taken into account to determine a dynamic minimum distance threshold.

It will be appreciated that if the robotic vehicle and/or the human are travelling at a higher speed towards each other, the robotic vehicle may require a greater distance over which to slow down, and optionally halt, to prevent a collision. As a result, the minimum distance threshold may increase with the robotic vehicle's speed, weight or other factors.

The speed of the robotic vehicle and/or the human may be monitored in a number of ways which may occur to a person skilled in the art. For example, the speed may be determined locally at the robotic vehicle and/or the human. For example, the speed may be determined using a speedometer located on the robotic vehicle and/or located on, or in the vicinity of, the human. The speed of the robotic vehicle and/or the human may be communicated between the robotic vehicle and the human by signals transmitted and received therebetween.

Additionally or alternatively, a fixed rate polling signal may be transmitted by a transmitter located on the robotic vehicle and/or a transmitter located on, or in the vicinity of, the human. The fixed rate polling signal may be received by a receiver located on, or in the vicinity of, the human and/or a receiver located on the robotic vehicle. The relative speed of the robotic vehicle and the human may be determined using the fixed polling rate. For example, the difference in strength measured between polls may be used to determine the relative speed of the robotic vehicle and the human.

Additionally or alternatively, the speed of the human and/or the robotic vehicle may be determined by an external system. For example, the speed of the human and/or the robotic vehicle may be determined using radar. For example, speed of the human and/or the robotic vehicle may be determined using a camera. In such an example, the speed of the human and/or the robotic vehicle may be determined using, for example, the rate of change of distance of the human and/or the robotic vehicle.

The minimum distance threshold may be limited by a required minimum distance threshold. That is, the dynamic minimum distance threshold may be prevented from dropping below a required minimum distance. The required minimum distance threshold may be determine by safety requirements to protect a human operating on the rail system. The required minimum distance threshold may be a distance below which risk of collision is considered unacceptable. As such, risk of collision may be further minimised.

A fixed minimum distance threshold may be based upon a maximum speed of the robotic vehicle and/or human. In this way, regardless of the instantaneous speed of the human or robotic vehicle, the robotic vehicle is guaranteed to slow down and optionally halt before reaching the human, thereby preventing a collision. This may increase a speed at which the override controller impedes motion of the robotic vehicle, as less calculations required. Further, potential errors, such as errors in the determination of speed the robotic vehicle and/or human, may be minimised.

At step 215 of method 200, if the distance between the robotic vehicle and a human operating on a rail system is determined to be lower than the minimum distance threshold, an indicator of a potential collision between the robotic vehicle and the human operating on the rail system is determined. Said indicator of a potential collision may be communicated to the override controller of the robotic vehicle, as described in reference to Fig. 5. As a result, the method 100 described in reference to Fig. 7 may be carried out. That is, as a result of determining an indicator of a potential collision in method 200, the motion controller of the robotic vehicle may be overridden by the override controller. The override module is configured to impede the motion of the robotic vehicle. As such, a collision between the robotic vehicle and a human operating on the rail system may be prevented.

Whilst the foregoing examples have been described with reference to robotic vehicles that traverse a grid, it will be readily understood that in alternative implementations the override controller can also be implemented in other areas of an automated storage and retrieval system in which robotic vehicles operate without a grid. In other alternative implementations, the override controller can be implemented in an automated storage and retrieval system in which there is no grid, and the robotic vehicles do not operate on a grid or a rail system.

A computer-readable medium is provided. The computer readable medium stores instructions thereon that, when executed by one or more processors in a robotic vehicle, causes the robotic vehicle to perform the steps of any of the methods described herein.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Aspects of the present disclosure are set out below. Each clause below corresponds to an aspect of the disclosure, and each possible combination of any of the clauses corresponds to an aspect of the disclosure. When clauses are combined, two or more instances of an element with the same name are to be understood as referring to the same element, even if the element is introduced by the word "a" more than once. Each possible combination of any features from the clauses below with any features described above also forms part of the disclosure.
1. A computer-implemented method for determining a potential collision between a robotic container handling vehicle and a human or human-operated vehicle operating on a rail system of an automated storage and retrieval system, the method comprising the steps of:
   determining, a distance between the robotic container handling vehicle and the human or human-operated vehicle;
   comparing the determined distance between the robotic container handling vehicle and the human or human operated vehicle to a minimum distance threshold; and
   if the determined distance is below the minimum distance threshold, providing an indicator of a potential collision to a control system of the robotic container handling vehicle.
2. The computer implemented method of clause 1, wherein the indicator of a potential collision is provided to an override controller of the robotic container-handling vehicle.
3. The computer-implemented method of clause 1 or clause 2, wherein the distance between the robotic container handling vehicle and human is determined based on a signal strength of a signal transmitted by a transmitter affixed to or near to the human or human-operated vehicle and received by the receiver of the robotic container handing vehicle.
4. The computer-implemented method of clause 1 or clause 2, wherein the distance between the robotic container handling vehicle and the human is determined based on the time of flight of a signal transmitted by a transmitter affixed to or near to the human and received by the receiver of the robotic container handing vehicle.
5. The computer-implemented method of clause 1 or clause 2, wherein the automated storage and retrieval system comprises a plurality of beacons, and wherein the distance between the robotic container handling vehicle and the human or human-operated vehicle is determined using triangulation techniques.
6. The computer-implemented method of clause 1 or clause 2, wherein the distance between the robotic container handling vehicle and human is determined based on a signal indicating the known position of the human or human operated vehicle received by the robotic container-handling vehicle, and a known position of the robotic container handling vehicle.
7. The computer-implemented method of any preceding clause, wherein signal received by the robotic container-handling vehicle is a radio-frequency signal.
8. The computer-implemented method of any preceding clause, wherein the human is operating a manned service vehicle.
9. The computer-implemented method of any preceding clause, wherein the minimum distance threshold is greater than 1m and optionally less than 30m.
10. A computer-implemented method for preventing the collision of a robotic container handling vehicle and a human or human-operated vehicle operating on a rail system of an automated storage and retrieval system, the method comprising the steps of: receiving, at a receiver of the robotic container handling vehicle, a signal from a transmitter affixed to or near to the human or human operated vehicle; comparing the signal strength of the received signal to a minimum distance threshold; and if the distance is below a threshold, causing the robotic container handling vehicle to pause operation on the rail system.

## Claims

1. A robotic vehicle arranged to move on a rail system of an automated grid-based storage and retrieval system, the robotic vehicle having:
a motion controller arranged to control motion of the robotic vehicle on the rail system; and
an override controller arranged, upon determination of an indicator of a potential collision involving the robotic vehicle and a human, to override the motion controller to impede motion of the robotic vehicle.

2. The robotic vehicle of claim 1, wherein the override controller is arranged to operate independently of the motion controller.

3. The robotic vehicle of any preceding claim, wherein the override controller has been certified safe by a safety assessment body.

4. The robotic vehicle of any preceding claim, wherein the override controller is arranged to impede motion by reducing a speed of the robotic vehicle.

5. The robotic vehicle of any preceding claim, further comprising one or more semiconductor switches arranged to drive one or more motors of the robotic vehicle to effect motion thereof, wherein the motion controller is arranged to control motion of the robotic vehicle by driving the one or more semiconductor switches, wherein the override controller is arranged to override the motion controller by preventing the motion controller from using the one or more semiconductor switches to drive the one or more motors,
optionally wherein the override controller is arranged to drive the one or more semiconductor switches to impede motion of the robotic vehicle,
further optionally wherein the one or more semiconductor switches are arranged to form one or more H bridges.

6. The robotic vehicle of any preceding claim, wherein the indicator is indicative of a distance between the robotic vehicle and the human being below a threshold value, optionally wherein the threshold value is based on one or more of:
a speed of the robotic vehicle;
a speed of the human; and/or
a predetermined user-based value.

7. The robotic vehicle of any preceding claim further comprising a mechanical brake, wherein the override controller is arranged to impede motion by applying the mechanical brake.

8. A method of operating a robotic vehicle arranged to move on a rail system of an automated grid-based storage and retrieval system, the method comprising:
determining an indicator of a potential collision involving the robotic vehicle and a human; and
overriding, by an override controller of the robotic vehicle, a motion controller of the robotic vehicle to impede motion of the robotic vehicle.

9. The method of claim 8, wherein the override controller operates independently of the motion controller.

10. The method of any of claims 8 to 9, wherein the override controller has been certified safe by a safety assessment body.

11. The method of any of claims 8 to 10, wherein impeding motion comprises reducing a speed of the robotic vehicle.

12. The method of any of claims 8 to 11, wherein motion of the robotic vehicle is caused by one or more semiconductor switches of the robotic vehicle driving one or more motors of the robotic vehicle, wherein the one or more semiconductor switches are controlled by the motion controller, and wherein overriding the motion controller comprises preventing the motion controller from using the one or more semiconductor switches to drive the one or more motors of the robotic vehicle, optionally wherein impeding motion comprises driving the one or more semiconductor switches by the override controller, further optionally wherein the one or more semiconductor switches are arranged to form one or more H bridges.

13. The method of any of claims 8 to 12, wherein determining an indicator of a potential collision comprises determining that a distance between the robotic vehicle and the human has fallen below a threshold value, and optionally, wherein the threshold value is based on one or more of:
a speed of the robotic vehicle;
a speed of the human; and/or
a predetermined user-based value.

14. The method of any of claims 8 to 13, wherein impeding motion comprises applying a mechanical brake of the robotic vehicle.

15. A computer-readable medium carrying instructions that, when executed by one or more processors, cause the method of any of claims 8 to 14 to be performed.
